# EUROPEAN PATENT APPLICATION

(11) **EP 1 124 351 A2**
(43) Date of publication of application: **16.08.2001**
(21) Application number: 01101315.8
(22) Date of filing: 20.01.2001
(51) Int. Cl.: H04L 12/12, H04L 29/06, H04L 12/42

(54) **Communication protocol for nodes connected in a daisy chain**

(30) Priority: 11.02.2000 US 502136
(71) Applicant: Alcatel USA Sourcing, L.P., Plano, TX 75075 (US)
(72) Inventor: Sabaa, Amr, Rohnert Part, CA 94928 (US); Manoharan, Madan, Santa Rosa, CA 95401 (US); Huang, Tony, Santa Clara, CA 95054 (US)
(74) Representative: Dreiss, Fuhlendorf, Steimle & Becker

(57) **Abstract**

A communication protocol for message delivery in a plurality of nodes connected in a daisy chain arrangement. In an initialization sequence, the nodes are assigned consecutive node numbers such that each node is aware of the maximum number of nodes connected in the daisy chain arrangement. Numbering information comprising node numbers is provided to each node. When the daisy chain arrangement is reconfigured because of addition, deletion, removal of one or more nodes, the nodes are re-numbered and a new maximum number is determined. Updated numbering information is broadcast to each node in the reconfigured daisy chain arrangement. Point-to-point communication between two nodes is effectuated by providing the intended receiver's node number in the message. An acknowledgment message between the receiver and sender is used for confirming message receipt. In broadcast communication mode, the sender monitors acknowledgments or replies from the recipients and if the number of reply messages does not correspond to the current maximum node number, a re-numbering process is effectuated. Thereafter, the sender rebroadcasts the message to insure confirmed delivery to each node in the daisy chain arrangement.

## Description

### BACKGROUND OF THE INVENTION

### Technical Field of the Invention

The present invention relates to communication technologies for interconnected nodes and, more particularly, to a communication protocol for nodes connected in a daisy chain arrangement.

### Description of Related Art

In the field of telecommunications, it is typically necessary to interconnect many types of devices and different equipment in order to effectuate information transfer and provide optimal service to end users. For instance, these devices and equipment may be provided as nodes in an interconnected communications system at a customer site (e.g., customer premises equipment or CPE) or as a network portion. Accordingly, there is a pervasive need for not only interconnecting the nodes in an efficient manner but also for providing the capability to communicate among and between the nodes in a reliable fashion.

Further, those skilled in the art should readily appreciate that the need to interconnect different types of telecommunications hardware has increased even more rapidly in recent years, primarily due to the advent of integrated packet-switched networks (PSNs) capable of seamlessly carrying voice, data, and multimedia. Consequently, a diverse array of equipment, including several types of information appliances and traditional telecommunications equipment, needs to be interconnected in order to gain benefits from the technological advances in the telecommunications art.

It is well known that one of the simplest interconnection schemes for coupling a plurality of nodes is a daisy chain arrangement wherein the nodes are connected in series, with a beginning and an end. Although daisy chain interconnections are common, the existing solutions for providing communications among the nodes are beset with various deficiencies and shortcomings. For example, when broadcast messaging is employed, the sending node is not only unaware of the size of the daisy chain arrangement but also it is not provided with any confirmation as to whether or not the broadcast message request is received by all of the nodes therein. Accordingly, if a node in the daisy chain does not receive the broadcast message, the sending node does not know that the message has not been reliably communicated and, consequently, it may go on operating under the assumption of normal conditions. However, such is not the case and severe communication failures may eventually ensue in the interconnected nodal system because of unreliability.

In addition, the existing communication solutions for daisy chains do not support point-to-point messaging between two nodes. It should be readily apparent to those skilled in the art that the lack of such a messaging method poses additional difficulty in achieving efficient inter-nodal communications.

Based upon the foregoing, it should be appreciated that there is an acute need for a communication protocol that provides assured reliability in broadcast messaging in addition to supporting efficient point-to-point communications in daisy-chain-connected nodes. The present invention provides such a solution.

### SUMMARY OF THE INVENTION

Accordingly, in one aspect, the present invention is directed to a reliable communication protocol for a plurality of nodes disposed in a daisy chain arrangement having a beginning and an end. The communication protocol operates by first numbering the nodes consecutively in an initialization step. Further, the total number of nodes (i.e., maximum number of nodes) in the daisy chain arrangement is also determined accordingly. Thereafter, numbering information comprising the consecutive node numbers and the maximum number of nodes is provided to each node in the daisy chain arrangement. Because of the numbering information, both point-to-point and broadcast messaging is reliably effectuated among the nodes. If the daisy chain arrangement is reconfigured (e.g., by adding or removing a node, etc.), the communication protocol determines a current maximum number of nodes and re-numbers at least a portion of the nodes in the daisy chain arrangement after it has been reconfigured. Subsequently, the numbering information is broadcast again to each node in the daisy chain arrangement after it has been reconfigured in order to effectuate reliable communication among the nodes.

In another aspect, the present invention is directed to a daisy chain arrangement having a plurality of nodes for effectuating both broadcast and point-to-point messaging. The daisy chain arrangement comprises a structure (hardware, software, or firmware) for assigning consecutive numbers to the plurality of nodes in the daisy chain arrangement and to determine the total number of nodes therein. Also included is a structure for broadcasting numbering information (comprising the consecutive node numbers and the total number of nodes) to each node in the daisy chain arrangement. A structure is provided for re-numbering the nodes if the daisy chain arrangement is reconfigured by way of, e.g., addition/insertion or deletion/removal of one or more nodes. A structure for re-transmitting the numbering information to each node is also provided in the daisy chain arrangement after it is reconfigured so that each node is aware of current node numbers and the maximum node number for reliable communication.

In a further aspect, the present invention provides a method of message delivery in a plurality of nodes connected in a daisy chain having a beginning and an end. The message delivery method commences by assigning consecutive node numbers to the plurality of nodes in the daisy chain. Thereafter, the node numbers are broadcast to each of the plurality of nodes so that each node aware of its own unique node number and the total number of nodes in the sequence. A point-to-point message request is transmitted by a sending node to an intended recipient node, wherein the message request contains the intended recipient node's node number (i.e., destination node number). Each node receiving the message request compares the destination node number with its own node number and, if it matches, the message is extracted. Otherwise, the message request is propagated to the next node in the daisy chain arrangement. When there is a nodal number match and the message is extracted by the intended recipient, it transmits an acknowledgment message back to the sending node using the sending node's node number.

In yet further aspect, the present invention is directed to a method of broadcast message delivery in a plurality of nodes connected in a daisy chain having a beginning and an end. After assigning consecutive node numbers to the nodes and determining the maximum number of nodes connected in the daisy chain, numbering information is broadcast to each node. When a sending node broadcasts a message request, it monitors the total number of acknowledgment messages received in response to the message request. The sending node re-transmits the broadcast message request for a predetermined number of times and, if the number of acknowledgment message replies does not correspond to the total number of the intended recipient nodes, a re-numbering process is then effectuated. The updated numbering information is provided to each node thereafter so that a sending node can reliably broadcast a message request to the re-numbered nodes in the sequence. In a further exemplary embodiment of the present invention, the broadcast message delivery method uses a plurality of heart beat messages to dynamically monitor the number of nodes connected in the daisy chain. By determining whether a node is inserted or removed dynamically, a re-numbering process is initiated so that updated numbering information is available to the nodes. Thereafter, the sending node broadcasts a message request which elicits a corresponding number of acknowledgment messages in response.

### BRIEF DESCRIPTION OF THE DRAWINGS

A more complete understanding of the present invention may be had by reference to the following Detailed Description when taken in conjunction with the accompanying drawings wherein:
FIGS. 1A and 1B depict a plurality of nodes connected in a daisy chain arrangement wherein the teachings of the present invention may be advantageously utilized;
FIG. 2 depicts a message flow diagram for initializing a plurality of nodes in a daisy chain arrangement in accordance with the teachings of the present invention;
FIGS. 3A - 3C depict message flow diagrams for adding or inserting a node into a plurality of nodes interconnected in a daisy chain arrangement in accordance with the teachings of the present invention;
FIGS. 4A - 4C depict message flow diagrams for removing a node from a plurality of nodes interconnected in a daisy chain arrangement in accordance with the teachings of the present invention; and
FIG. 5 depicts a flow chart illustrating the steps of an exemplary embodiment of an inter-nodal communication protocol provided in accordance with the teachings of the present invention.

### DETAILED DESCRIPTION OF THE DRAWINGS

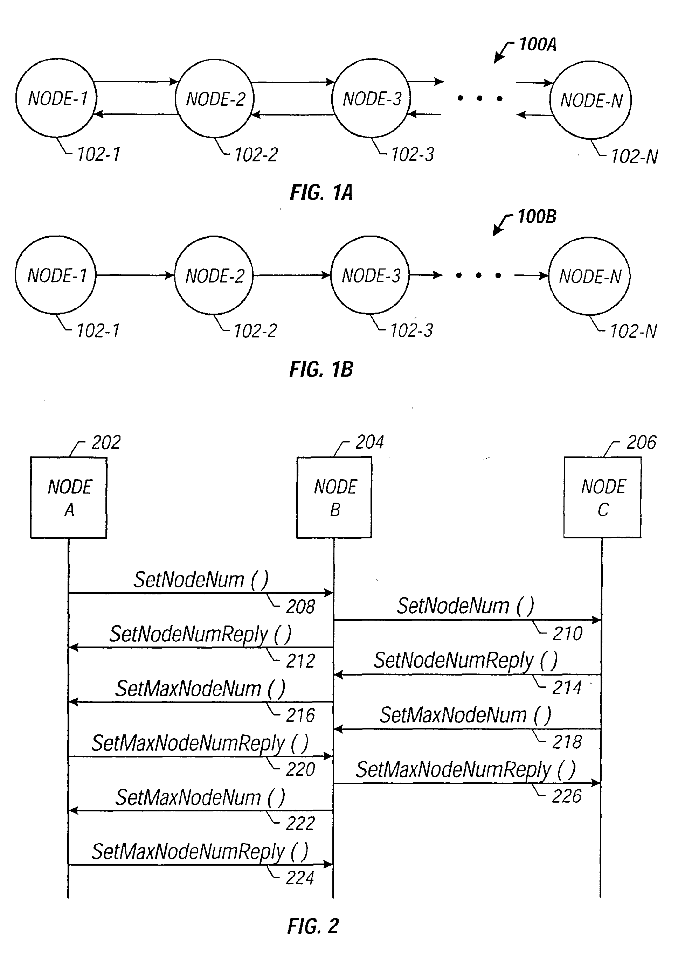

In the drawings, like or similar elements are designated with identical reference numerals throughout the several views thereof, and the various elements depicted are not necessarily drawn to scale. Referring now to FIGS. 1A and 1B, reference numerals 100A and 100B refer to two exemplary daisy chain arrangements wherein the teachings of the present invention may be advantageously practiced. The daisy chain arrangement 100A, comprising a plurality of nodes, Node- 1 102-1 through Node-N 102-N, is provided as a bidirectional daisy chain where a node may constitute one of the myriad telecommunications devices, information appliances or diverse communications equipment such as CPE. The daisy chain arrangement 100B, also comprising Nodes 102-1 through 102-N, is provided as a unidirectional daisy chain wherein a circular return path may be included (not shown) and Node 102-N is equipped with knowledge that it is the last node in the chain. Also, although not shown in FIGS. 1A and 1B, there may be one or more controller units coupled to the nodal chains in a suitable manner. Furthermore, appropriate network termination schemes may be employed with the daisy chains 100A and 100B exemplified herein.

FIG. 2 depicts a message flow diagram for initializing a plurality of nodes in a daisy chain arrangement in accordance with the teachings of the present invention. Three nodes are exemplified herein: Node A 202; Node B 204; and Node C 206. Those skilled in the art should readily appreciate that the three nodes depicted in this FIG. and the following FIGS. are exemplary of the nodes described hereinabove with respect to FIGS. 1A and 1B. Further, in this exemplary embodiment, Node C 206 is provided as a downstream node with respect to Node B 204 which, in turn, is a downstream node for Node A 202.

In accordance with the teachings of the present invention, each node is provided with a Current Node Number (CurrNodeNum) variable which, during the initialization process, is set to 1. Thereafter, each node sends a SetNodeNumber message with a Node Number (NodeNum) parameter being equal to CurrNodeNum+1 to the downstream node to set its node number to 2. When a node receives a SetNodeNumber message from its upstream node, that node sets its CurrNodeNum variable to the NodeNum received in the SetNodeNumber message and sends another SetNodeNumber message with NodeNum = CurrNodeNum+1 to the downstream node. It should be apparent to those skilled in the art that this process is carried on for all the downstream nodes in the daisy chain arrangement to number the nodes sequentially from 1 to N, wherein node 1 is the beginning of the daisy chain and node N is the end.

The foregoing messaging scheme is exemplified with respect to Nodes 202, 204, 206 as follows. Initially, CurrNodeNum for each of the three Nodes is set to 1. Thereafter, Node A 202 sends a SetNodeNum () or SetNodeNumber () message 208 to the downstream node, i.e., Node B 204, with the NodeNum parameter being equal to CurrNodeNum + 1 (i.e., 2). Responsive to the SetNodeNumber ()message 208 from Node A, Node B 204 sets its CurrNodeNum to the NodeNum parameter in the message (i.e., the CurrNodeNum for Node B is set to 2) and, further, Node B sends a SetNodeNumber () message 210 to its downstream node, i.e., Node C 206, wherein the NodeNum parameter is equal to CurrNodeNum + 1 (i.e., 3). In addition, Node B 204 also sends a SetNodeNumber Reply () message 212 to its upstream node, Node A 202, in response to the SetNodeNumber () message 208 received therefrom. A similar SetNodeNumber Reply () message 214 is also received by Node B 204 from Node C 206 responsive to the SetNodeNumber () message 210.

Furthermore, each node in the daisy chain arrangement also maintains a Maximum Node Number (MaxNodeNum) variable in accordance with the teachings of the present invention. Preferably, when this variable is changed for a node, it sends a SetMaxNodeNum () message in the upstream direction with the value of the MaxNodeNum variable as a message parameter. The MaxNodeNum variable is provided herein so that a node is aware of how many Acknowledge responses (i.e., replies) it should receive when it sends a broadcast message in the daisy chain arrangement. Additionally, each upstream node receiving a SetMaxNodeNum () message transmits an appropriate SetMaxNodeNum Reply () message back to the downstream node from where the SetMaxNodeNum () message is sent. As can be seen in FIG. 2, these messages among Nodes 202, 204, 206 are exemplified by SetMaxNodeNum () messages 216, 218, 222 and SetMaxNodeNum Reply () messages 220, 224, 226.

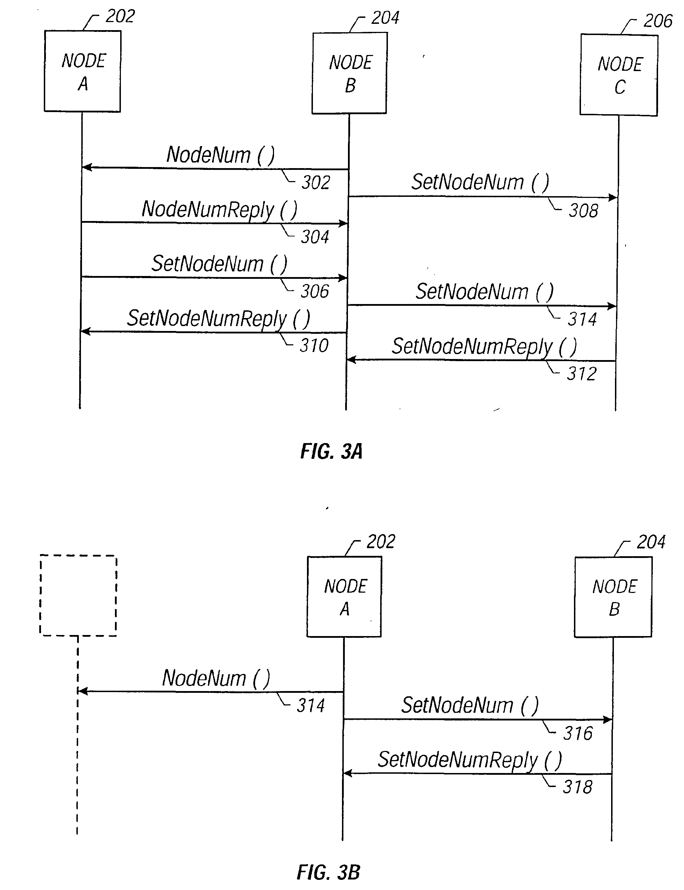

FIG. 3A depicts a message flow diagram for adding or inserting a node in the middle of a daisy chain arrangement of a plurality of nodes. In the exemplary embodiment depicted in FIG. 3A, Node B 204 is provided as the "new" node that is inserted between Node A 202 and Node C 206.

In accordance with the teachings of the present invention, when a node is added or inserted, preferably all the downstream nodes are re-numbered. After setting its NodeNum variable to 1, the new node sends a SetNodeNum (NodeNum = 2) message in the downstream direction and a NodeNum (NodeNum = 1) message in the upstream direction. In the exemplary message flow diagram, these two messages are labeled with reference numerals 308 and 302, respectively. Node A 202, which receives the NodeNum (1) message 302 from Node B 204, sends a NodeNum Reply() message 304 to it in response thereto.

Additionally, when Node A 202 receives the NodeNum (NodeNum = 1) message 302 from Node B 204, it compares its Current Node Number with the NodeNum parameter in the message. After determining that its CurrNodeNum is not equal to the received NodeNum-1, Node A 202 sends a SetNodeNum (NodeNum = CurrNodeNum + 1) message 306 to the new node, Node B 204, which then takes up the correct nodal number in the daisy chain arrangement by setting its CurrNodeNum to the NodeNum parameter in the message. Thereafter, Node B sends a SetNodeNum (NodeNum = CurrNodeNum + 1) message 314 downstream to Node C 206. The remaining numbering process is effectuated in a manner analogous to the initialization process set forth above so that all the downstream nodes (from the new node) are re-numbered accordingly and appropriate SetNodeNum Reply () messages are transmitted back in response. Furthermore, although not shown in FIG. 3A, the MaxNodeNum parameter may also be reset and propagated in the daisy chain arrangement as described in the foregoing.

Referring now to FIG. 3B, depicted therein is a message flow diagram for adding a new node at the beginning of a daisy chain nodal arrangement in accordance with the teachings of the present invention. In this exemplary scenario, Node A 202 is provided as the "new" node to be added. Node A 202 sets its CurrNodeNum to 1 and sends a SetNodeNum (NodeNum = CurrNodeNum + 1) message 316 in the downstream direction to Node B 204. Also, Node A sends a NodeNum (NodeNum = 1) message 314 in the upstream direction which, however, will be lost because there are no upstream nodes in the daisy chain arrangement with respect to Node A 202. The nodal re-numbering process is subsequently effectuated in the downstream portion of the daisy chain arrangement similar to the initialization process set forth above.

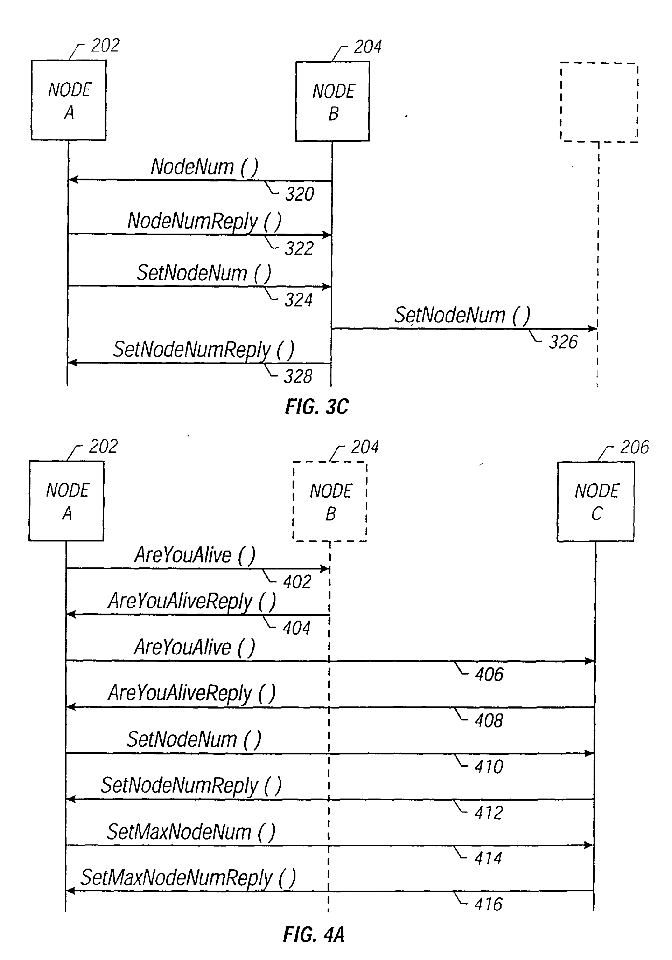

FIG. 3C depicts a message flow diagram for adding a node at the end of a daisy chain arrangement. In the exemplary scenario shown herein, Node B 204 is provided as the "new" node that is added to the nodal daisy chain. The new node (Node B) sets its CurrNodeNum to 1 and sends a SetNodeNum (NodeNum = CurrNodeNum + 1) message 326 in the downstream direction. However, as there are no downstream nodes in the daisy chain arrangement with respect to the newly added node, Node B 204, this message will be lost.

The new node (Node B 204) also sends a NodeNum (NodeNum = 1) message 320 to the upstream node, Node A 202. In response, a NodeNum Reply () message 322 is transmitted back from Node A to Node B. Furthermore, upon comparing its CurrNodeNum variable with the received NodeNum-1, Node A determines that its CurrNodeNum is not equal to NodeNum parameter. Thereafter, Node A sends a SetNodeNum (NodeNum = CurrNodeNum + 1) message 324 to the new node, Node B. In response thereto, Node B transmits a SetNodeNum Reply () message 328 to Node A.

In addition to dynamically maintaining unique numbering information for nodes added in a daisy chain arrangement, the present invention also provides an advantageous scheme for re-numbering nodes when a node is removed from a sequence. As can be readily appreciated by those skilled in the art, when a node is removed from a sequentially-numbered arrangement, the remaining nodes of the arrangement will not have consecutive numbers. Accordingly, whereas point-to-point communications between two nodes may not be adversely affected by the removal of a node, broadcast messaging will be, as the sender of the broadcast message will not receive the correct number of message replies.

In accordance with the teachings of the present invention, a "heart beat" message is employed among the nodes to discover if a node is removed. In addition, in a presently preferred exemplary embodiment of the present invention, the node disposed in the upstream direction of the node that is removed starts the re-numbering process.

FIG. 4A depicts a message flow diagram for removing a node from the middle of a daisy chain arrangement, wherein Node B 204 is provided as the node to be "removed." A heart beat message called AreYouAlive () message 402 is preferably periodically sent from Node A 202, the upstream node, to Node B 204. As long as Node B is in the daisy chain arrangement, it responds to the heart beat message by transmitting AreYouAlive Reply () messages 404 to Node A as frequently as needed. When Node B 204 is removed from the sequence, however, Node A 202 no longer receives the reply messages and it subsequently sends the heart beat messages 406 directly to the node (Node C 206) that is downstream from the removed node, Node B 204. Upon receiving appropriate AreYouAlive Reply () messages 408 from Node C, Node A starts the re-numbering process by initiating a SetNodeNum () message 410 towards Node C. A SetNodeNum Reply () message 412 is subsequently received from Node C in response thereto. After re-numbering the remaining downstream nodes in the daisy chain arrangement, the MaxNodeNum variable is updated and propagated to the nodes in the manner described above. A SetMaxNodeNum () message 414 and a SetMaxNodeNum Reply () message 416 are accordingly illustrated in the message flow diagram shown in FIG. 4A.

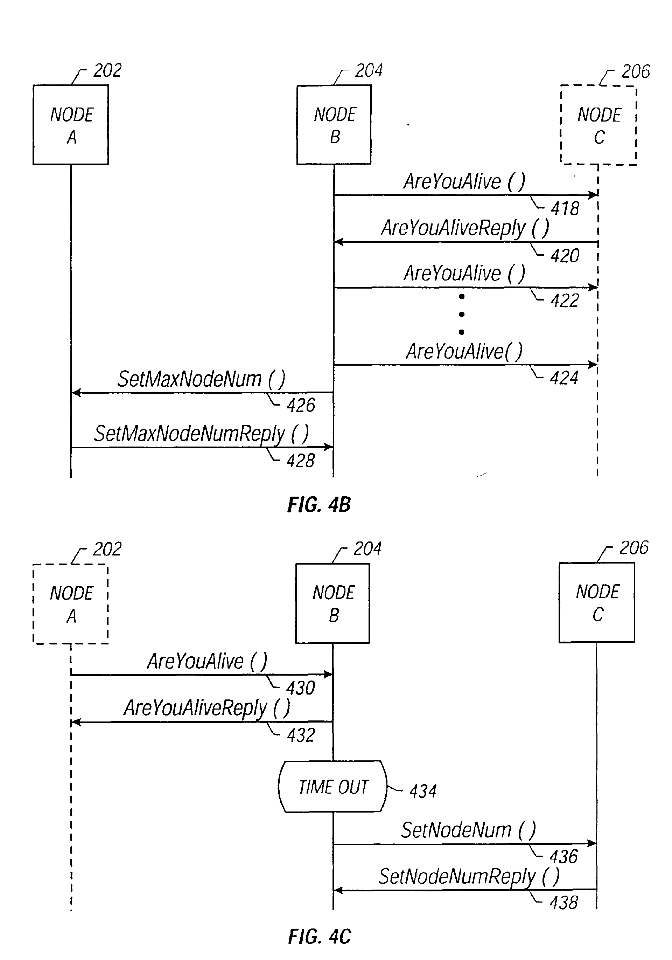

FIG. 4B depicts a message flow diagram for removing a node from the end of a daisy chain arrangement in accordance with the teachings of the present invention. Illustratively, Node C 206 is provided as the end of the chain that is to be "removed." When present, Node C 206 responds to the AreYouAlive () message 418 from Node B 204 by sending an appropriate AreYouAlive Reply () message 420. On the other hand, when Node C 206 is removed from the daisy chain arrangement, a plurality of heart beat messages (i.e., AreYouAlive () messages 422, 424) from Node B 204 will go unanswered thereby. Accordingly, after a predetermined time-out period, a specific number of unanswered heart beat messages, or a combination of both, Node B assumes the role of being the end node of the daisy chain arrangement and sets the MaxNodeNum variable to its CurrNodeNum variable. Thereafter, Node B 204 sends a SetMaxNodeNum (MaxNodeNum = CurrNodeNum) message 426 in the upstream direction to Node A 202. As should be apparent to those skilled in the art from the foregoing discussion, this message is propagated or broadcast to the remaining upstream nodes so that each node is aware of the total number of the nodes in the daisy chain. Also, responsive to the SetMaxNodeNum () message 426, a SetMaxNodeNum Reply () message 428 is sent back downstream from Node A 202 to Node B 204.

Referring now to FIG. 4C, depicted therein is a message flow diagram for removing a node from the beginning of a daisy chain arrangement. Illustratively, Node A 202 is provided as the beginning node of the daisy chain that is to be "removed." When present, Node A 202 engages in a heart beat messaging process with the downstream node, Node B 204, by transmitting AreYouAlive () messages 430 and receiving appropriate AreYouAlive Reply () messages 432 accordingly. When Node A 202 is removed from the daisy chain, however, Node B 204 will not receive the heart beat messages and, after a suitable time-out period 434, Node B 204 assumes the role of being the start node or beginning of the daisy chain sequence. Accordingly, Node B 204 sets its CurrNodeNum to 1 and sends a SetNodeNum (NodeNum = CurrNodeNum + 1) message 436 downstream to re-number the remaining nodes. Thereafter, appropriate SetNodeNum Reply () messaging 438 is effectuated in the upstream direction in response to the SetNodeNum () messaging 436.

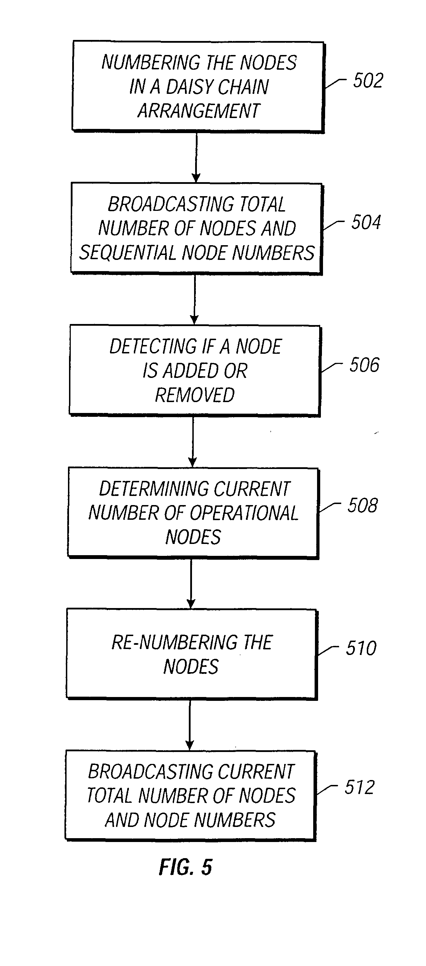

FIG. 5 depicts a flow chart of the steps involved in an inter-nodal communication protocol or methodology provided in accordance with the teachings set forth hereinabove. Initially, the nodes connected in a daisy chain arrangement are uniquely numbered (by assigning consecutive numbers) and the total number of the nodes is determined (step 502). Each node then broadcasts its node number to the nodes in the daisy chain. Further, each node is also provided with the total number of the nodes in the sequence. These procedures are set forth in the flow chart shown in FIG. 5 as step 504.

Thereafter, if there is a change in the configuration of the daisy chain arrangement (i.e., reconfiguration) due to, for example, addition/insertion of one or more nodes, deletion/removal of one or more nodes, or one or more nodes being unresponsive for some reason, et cetera, such changes are detected or monitored appropriately (step 506). The communication protocol of the present invention subsequently determines the total number of nodes present in the daisy chain sequence after accounting for the changes, if any (step 508). The nodes are then re-numbered as set forth in the initialization procedure described hereinabove (step 510). The re-numbering information (i.e., current node numbers and current total number of nodes (MaxNodeNum)) is made available to the nodes in the sequence so as to enable both point-to-point and broadcast messaging in a reliable manner.

Accordingly, for point-to-point communication, the destination node number (i.e., the intended receiver's node number) is preferably included in the message transmitted by the sending node. Each node receiving the message compares the destination node number with its own NodeNum variable and, if they match, the message is extracted. Otherwise, the message is forwarded to the next node in the daisy chain arrangement.

Those skilled in the art should appreciate that two types of broadcast communication may be practiced in accordance with the teachings of the present invention. In the first type, each node receiving a broadcast message request from the sender transmits a reply message back to the sender and forwards the message to the next node until every node in the sequence receives the broadcast message request. In the second type, the sender may preferably receive a maximum of two replies -- one from upstream nodes and one from downstream nodes -- which include a "Yes" or "No" response. When each node receives the broadcast message request, it ascertains whether it can answer the request or has to forward it to the next node. If it can answer the request, it sends a Yes response back to the sender. Otherwise, a No response is sent and the message is propagated along the sequence. Those skilled in the art should understand upon reference hereto that the second type of broadcasting may typically involve less number of messages.

Based upon the foregoing Detailed Description, it should be readily apparent that the present invention provides a simple yet cost-effective solution that advantageously overcomes the shortcomings and deficiencies of the conventional inter-nodal communication schemes used in daisy chain arrangements. The messaging protocol provided in accordance with the teachings of the present invention guarantees reliable communication because the sending node is aware of the number of reply messages it should receive for a broadcast request and is capable of re-transmitting the request if any reply is missing. Further, because of the unique numbering that is dynamically maintained in the daisy chain, reliable point-to-point messaging between two nodes is also enabled thereby wherein the sender can specify the node number of the intended receiver node.

Further, it is believed that the operation and construction of the present invention will be apparent from the foregoing Detailed Description. While the method and nodal arrangement shown and described have been characterized as being preferred, it should be readily understood that various changes and modifications could be made therein without departing from the scope of the present invention as set forth in the following claims. For example, different types of communications equipment may operate as the nodes connected in a daisy chain that may be disposed in bi-directional or uni-directional configurations. Also, several topologies for realizing the daisy chain may be provided.

In addition, the node removal scheme of the present invention may also be implemented without a heart beat messaging procedure as set forth in the foregoing. For example, because the sending node is aware of the total number of replies it should receive for a broadcast message, it can detect one or more missing replies and, accordingly, the sending node may re-send the broadcast request for a predetermined number of times. After detecting missing replies in each attempt, the sending node then starts the re-numbering process in accordance with the teachings of the present invention. Moreover, those skilled in the art should readily appreciate that the node removal scheme of the present invention may also be practiced advantageously where one or more nodes in the sequence are rendered unresponsive or inoperable for some reason. Accordingly, all these numerous modifications, substitutions, additions, combinations, extensions, etc. are considered to be within the ambit of the present invention whose scope is limited solely by the following claims.

## Claims

1. A communication protocol for a plurality of nodes disposed in a daisy chain arrangement having a beginning and an end, comprising the steps of:
numbering said plurality of nodes in said daisy chain arrangement;
broadcasting numbering information to each node in said daisy chain arrangement;
if said daisy chain arrangement is reconfigured, determining a current maximum number of nodes and re-numbering at least a portion of said nodes in said daisy chain arrangement after it has been reconfigured; and
broadcasting said numbering information to each node in said daisy chain arrangement after it has been reconfigured.

2. The communication protocol for a plurality of nodes disposed in a daisy chain arrangement as set forth in claim 1, wherein said numbering step is effectuated by assigning consecutive numbers to said plurality of nodes.

3. The communication protocol for a plurality of nodes disposed in a daisy chain arrangement as set forth in claim 2, wherein said numbering information comprises at least one of said consecutive numbers assigned to said plurality of nodes and a maximum number of nodes disposed in said daisy chain arrangement.

4. The communication protocol for a plurality of nodes disposed in a daisy chain arrangement as set forth in claim 2, wherein said daisy chain arrangement is reconfigured by adding a new node at the end of said daisy chain arrangement.

5. The communication protocol for a plurality of nodes disposed in a daisy chain arrangement as set forth in claim 2, wherein said daisy chain arrangement is reconfigured by adding a new node at the beginning of said daisy chain arrangement.

6. The communication protocol for a plurality of nodes disposed in a daisy chain arrangement as set forth in claim 2, wherein said daisy chain arrangement is reconfigured by inserting a new node between the beginning and the end of said daisy chain arrangement.

7. The communication protocol for a plurality of nodes disposed in a daisy chain arrangement as set forth in claim 2, wherein said daisy chain arrangement is reconfigured by removing a node from the beginning of said daisy chain arrangement.

8. The communication protocol for a plurality of nodes disposed in a daisy chain arrangement as set forth in claim 2, wherein said daisy chain arrangement is reconfigured by removing a node from the end of said daisy chain arrangement.

9. The communication protocol for a plurality of nodes disposed in a daisy chain arrangement as set forth in claim 2, wherein said daisy chain arrangement is reconfigured by removing a node from said daisy chain arrangement, said node being disposed between the beginning and the end of said daisy chain arrangement.

10. A daisy chain arrangement having a plurality of nodes, comprising:
means for assigning consecutive numbers to said plurality of nodes in said daisy chain arrangement;
means for broadcasting numbering information to each node in said daisy chain arrangement;
means for re-numbering said nodes if said daisy chain arrangement is reconfigured; and
means for re-transmitting said numbering information to each node in said daisy chain arrangement after it is reconfigured.

11. The daisy chain arrangement having a plurality of nodes as set forth in claim 10, wherein said numbering information comprises at least one of said consecutive numbers assigned to said plurality of nodes and a maximum number of nodes disposed in said daisy chain arrangement.

12. A method of message delivery in a plurality of nodes connected in a daisy chain having a beginning and an end, comprising the steps of:
assigning consecutive node numbers to said plurality of nodes;
broadcasting said node numbers to each of said plurality of nodes in said daisy chain;
transmitting a message request by a sending node to an intended recipient node, said message request containing said intended recipient node's node number; and
transmitting an acknowledgment message by said intended recipient node to said sending node, said acknowledgment message containing said sending node's node number.

13. The method of message delivery in a plurality of nodes connected in a daisy chain as set forth in claim 12, further comprising the steps of:
re-assigning consecutive node numbers to at least a portion of said plurality of nodes if said daisy chain is reconfigured; and
broadcasting said node numbers to each of said plurality of nodes in said daisy chain after it is reconfigured.

14. The method of message delivery in a plurality of nodes connected in a daisy chain as set forth in claim 13, wherein said daisy chain is reconfigured by adding a new node at the end of said daisy chain.

15. The method of message delivery in a plurality of nodes connected in a daisy chain as set forth in claim 13, wherein said daisy chain is reconfigured by adding a new node at the beginning of said daisy chain.

16. The method of message delivery in a plurality of nodes connected in a daisy chain as set forth in claim 13, wherein said daisy chain is reconfigured by inserting a new node between the beginning and the end of said daisy chain.

17. The method of message delivery in a plurality of nodes connected in a daisy chain as set forth in claim 13, wherein said daisy chain is reconfigured by removing a node from the beginning of said daisy chain.

18. The method of message delivery in a plurality of nodes connected in a daisy chain as set forth in claim 13, wherein said daisy chain is reconfigured by removing a node from the end of said daisy chain.

19. The method of message delivery in a plurality of nodes connected in a daisy chain as set forth in claim 13, wherein said daisy chain is reconfigured by removing a node from said daisy chain, said node being disposed between the beginning and the end of said daisy chain.

20. A method of message delivery in a plurality of nodes connected in a daisy chain having a beginning and an end, comprising the steps of:
assigning consecutive node numbers to said plurality of nodes and determining a maximum number of nodes connected in said daisy chain;
broadcasting said node numbers to each of said plurality of nodes in said daisy chain, wherein each node is aware of said maximum number of nodes;
broadcasting a message request by a sending node to said plurality of nodes other than said sending node;
monitoring by said sending node a total number of acknowledgment messages received in response to said message request from said plurality of nodes other than said sending node; and
re-transmitting said message request by said sending node if said total number of said acknowledgment messages is not correspond to said maximum node number.

21. The method of message delivery in a plurality of nodes connected in a daisy chain as set forth in claim 20, further comprising the steps of:
re-assigning consecutive node numbers to at least a portion of said plurality of nodes if said daisy chain is reconfigured and determining a new maximum number of nodes connected in said daisy chain;
broadcasting said node numbers to each of said plurality of nodes in said daisy chain after it is reconfigured, wherein each node is aware of said new maximum number of nodes.

22. The method of message delivery in a plurality of nodes connected in a daisy chain as set forth in claim 21, wherein said daisy chain is reconfigured by adding a new node at the end of said daisy chain.

23. The method of message delivery in a plurality of nodes connected in a daisy chain as set forth in claim 21, wherein said daisy chain is reconfigured by adding a new node at the beginning of said daisy chain.

24. The method of message delivery in a plurality of nodes connected in a daisy chain as set forth in claim 21, wherein said daisy chain is reconfigured by inserting a new node between the beginning and the end of said daisy chain.

25. The method of message delivery in a plurality of nodes connected in a daisy chain as set forth in claim 21, wherein said daisy chain is reconfigured by removing a node from the beginning of said daisy chain.

26. The method of message delivery in a plurality of nodes connected in a daisy chain as set forth in claim 21, wherein said daisy chain is reconfigured by removing a node from the end of said daisy chain.

27. The method of message delivery in a plurality of nodes connected in a daisy chain as set forth in claim 21, wherein said daisy chain is reconfigured by removing a node from said daisy chain, said node being disposed between the beginning and the end of said daisy chain.
